# EUROPEAN PATENT SPECIFICATION

(11) **EP 0 648 657 B1**
(45) Date of publication and mention of the grant of the patent: **28.05.1997**
(21) Application number: 94115379.3
(22) Date of filing: 29.09.1994
(51) Int. Cl.: B60T 8/26

(54) **Braking force controller**
Bremskraftregler
Régulateur de force de freinage

(30) Priority: 13.10.1993 JP 255361/93
(43) Date of publication of application: 19.04.1995
(73) Proprietor: HONDA GIKEN KOGYO KABUSHIKI KAISHA, Minato-ku Tokyo (JP)
(72) Inventor: Iwashita, Kanau, c/o K.K. Honda Gijutsu Kenkyusho, Wako-shi, Saitama (JP); Tsuchida, Tetsuo, c/o K.K. Honda Gijutsu Kenkyusho, Wako-shi, Saitama (JP)
(74) Representative: Fincke, Karl Theodor, Dipl.-Phys. Dr.

(56) References cited:
- EP-A- 0 082 044
- EP-A- 0 451 555
- DE-A- 2 847 562
- DE-A- 2 847 571
- DE-A- 2 917 526
- DE-A- 3 011 138

## Description

The present invention relates to a braking force controller inserted in a line interconnecting a master cylinder and a brake cylinder to regulate an input hydraulic pressure transmitted from the master cylinder thereto and and transmits an output hydraulic pressure to the brake cylinder.

Such a braking force controller is disclosed, for example, in Japanese Patent Publication No. 59-40672.

When incorporating a proportional pressure reducing means for reducing increase in output hydraulic pressure corresponding to increase in input hydraulic pressure, a pressure holding means for holding the output hydraulic pressure at a fixed value regardless of the increase of the input hydraulic pressure, and a pressure reducing means for reducing the output hydraulic pressure when the input hydraulic pressure increases into a braking force controller to be inserted in a line interconnecting a master cylinder and a brake cylinder for the rear wheel of a motorcycle to distribute braking force to the front wheel and the rear wheel of the motorcycle at a braking force distribution ratio as close to an ideal braking force distribution ratio as possible, the proportional pressure reducing means and the pressure reducing means are provided respectively with a proportional pressure reducing piston and a pressure reducing piston. Therefore, the conventional braking force controller needs a comparatively large number of parts and has a comparatively large size.

Known from EP-A-0 082 044 is a brake regulator for a vehicle in which in a regulator body there is provided a stepped cylinder bore. In the stepped cylinder bore, a piston is provided which is axially movable. One end of the piston is extending to the exterior of the regulator body and a force corresponding to the wheel load can be applied thereto. Provided in the stepped bore is an axially movable separating wall member which in its central portion comprises a valve opening. Provided at the other end of the piston is a valve member which can be seated on the valve opening for closing same. The axially movable separating wall member separates an inlet and an outlet chamber from each other. The portion of the piston projecting into the stepped bore is provided with stepped regions for decreasing its diameter from the outer end to the end at which a valve member is provided. Thus due to the pressure generated in the inlet chamber and due to the stepped regions on the piston, the piston is forced into a direction to close the valve opening disposed in the axially movable separating wall member.

EP-A-0 451 555 discloses a braking system for a motorcycle in which a pressure control valve is disposed between a mechanical servo mechanism and a brake cylinder of a rear wheel of a motorcycle. The pressure control valve comprises an input port connected to the output port of the mechanical servo mechanism and an output port connected to ports of the brake cylinder of the rear wheel. A valve chest communicating with the input port and an oil chamber communicating with the output port are inter-connected via an oil passage, and a proportional valve is movably disposed within the valve chest. A cut valve is disposed in an internal chamber of the proportional valve and is biased in a closing direction by a valve spring. When the cut valve is in an opened position, the input port is in communication with the output port. The pressure control valve further includes a pressure reduction piston which has a leading end facing the oil chamber and a step formed at its intermediate portion.

DE-A-30 11 138 discloses a braking force regulator for a hydraulic motorcycle brake structure. The brake structure comprises a rear brake and a front brake which are operable by a master cylinder respectively via a valve which is biased into an opened position. The respective valves are pressure reduction valves having different closing behaviours in order to ensure that upon activation of the master cylinder in a first period of time both valves are opened and that with increasing master cylinder pressure only the valve associated with the front wheel reduces the pressure and subsequently only the valve associated with the rear wheel reduces the pressure.

Known from DE-AS 29 17 526 is a hydraulic motorcycle brake system comprising a braking force regulator. The braking force regulator includes a stepped piston which is displaceable against the returning force of a return spring. Further provided is a valve which is operable to close the pressure fluid connection between a pressure inlet chamber and a pressure outlet chamber of the braking force regulator.

DE-AS 28 47 571 and DE-AS 28 47 562 disclose a braking force regulator for a hydraulic motorcycle braking system comprising a control piston which in response to activation of a master cylinder is displaceable against the force of a return spring.

It is an object of the present invention to provide a braking force controller comprising a comparatively small number of parts and having a compact construction.

With the foregoing object in view, the present invention provides a braking force controller for regulating an input hydraulic pressure produced by a master cylinder and applied to an input port and transmitting a regulated hydraulic pressure through an output port to a brake cylinder, comprising: a casing provided with a cylinder communicating with the input port and the output port, a proportional pressure reducing means for reducing the rate of increase of the output hydraulic pressure according to the increase of the input hydraulic pressure, comprising a proportional pressure reducing piston slidably fitted in the cylinder so as to slide against the force of a proportional pressure reducing spring when an input hydraulic pressure acts thereon, and a cut valve held within the proportional pressure reducing piston for movement relative to the proportional pressure reducing piston to control the connection of the input port and the output port; a pressure holding means for holding the output hydraulic pressure on a fixed level regardless of increase in the input hydraulic pressure; and a pressure reducing means for reducing the output hydraulic pressure when the input hydraulic pressure increases; characterized in that the pressure reducing means comprises a pressure reducing piston formed integrally with the proportional pressure reducing piston, slidably fitted in the cylinder and capable of sliding against the preset load of a pressure reducing spring greater than that of the proportional pressure reducing spring when the input hydraulic pressure increases beyond a predetermined value.

In this braking force controller in accordance with the present invention, the proportional pressure reducing means, the pressure holding means and the pressure reducing means are arranged coaxially within the cylinder.

Preferred embodiments of the present invention will be described hereinafter with reference to the accompanying drawings.

Fig. 1 is a plan view of a motorcycle incorporating a braking system.

Fig. 2 is a block diagram of the braking system.

Fig. 3 is an enlarged side view of a portion indicated at 3 in Fig. 2.

Fig. 4 is an enlarged longitudinal sectional view of an essential portion of the arrangement shown in Fig. 3.

Fig. 5 is an enlarged longitudinal sectional view of a portion indicated at 5 in Fig. 2.

Fig. 6 is an enlarged longitudinal sectional view, similar to Fig. 5, of assistance in explaining the operation of the braking system.

Fig. 7 is an enlarged longitudinal sectional view, similar to Fig. 5, of assistance in explaining the operation of the braking system.

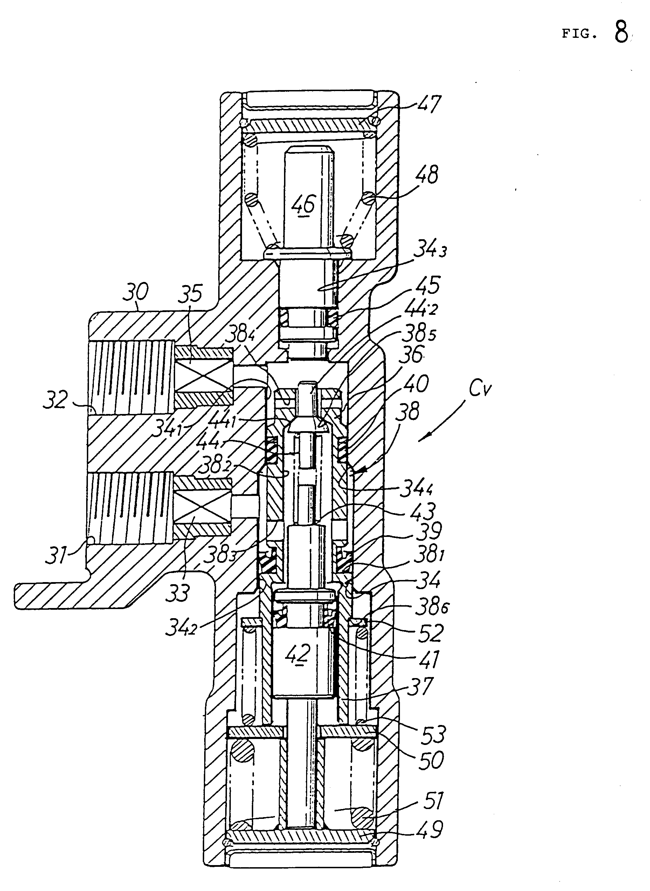

Fig. 8 is an enlarged longitudinal sectional view, similar to Fig. 5, of assistance in explaining the operation of the braking system.

Fig. 9 is a graph showing the braking force distribution characteristic of the braking system.

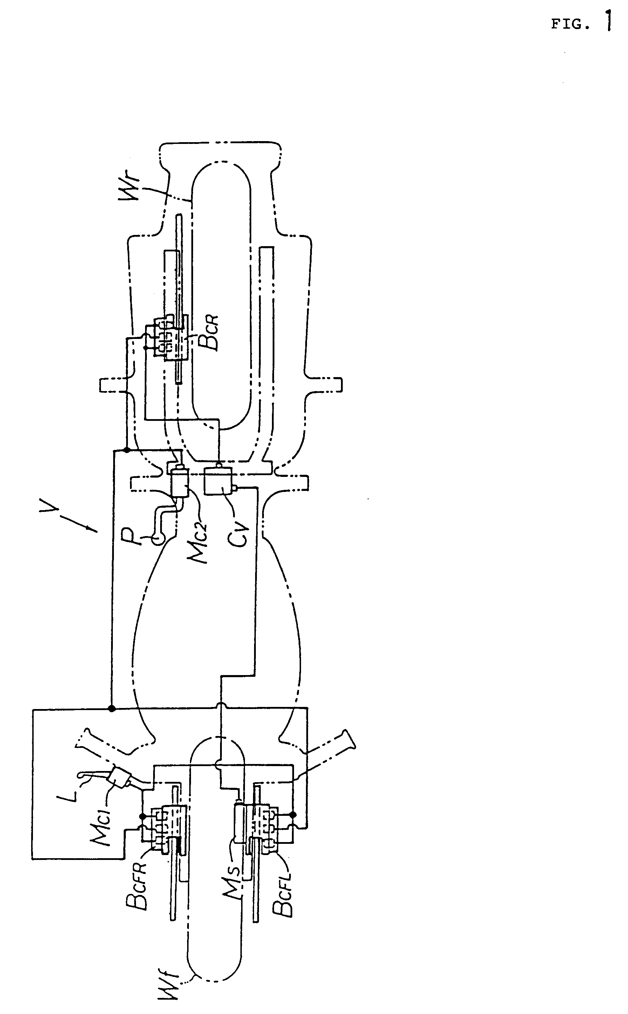

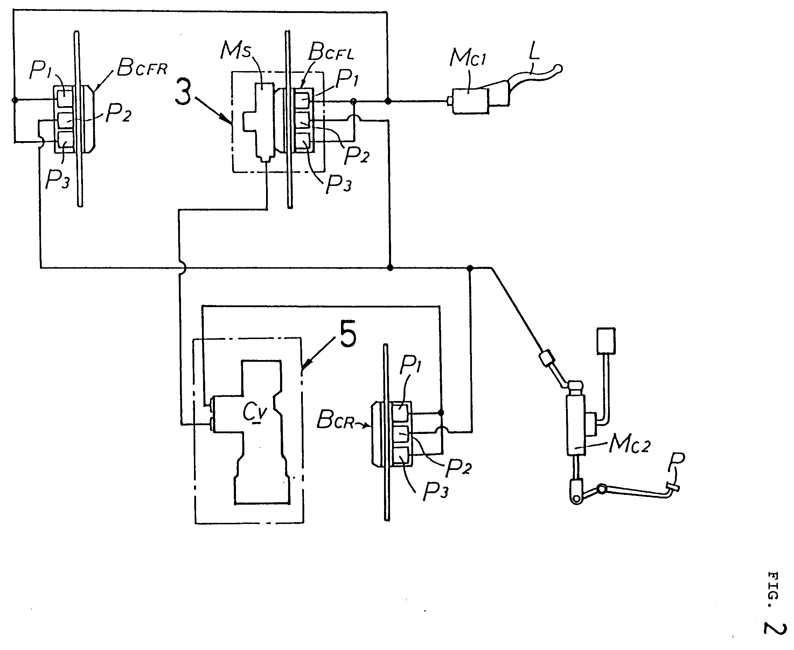

Referring to Figs. 1 and 2, a motorcycle V has a brake lever L held on a handlebar, and a brake pedal P supported on a main frame. Brake cylinders Bc_{FR} and Bc_{FL} are disposed on the right side and on the left side, respectively, of a front wheel Wf. Each of the brake cylinders Bc_{FR} and Bc_{FL} is provided with three pots, i.e., a front pot P₁, a middle pot P₂ and a rear pot P₃. A brake cylinder Bc_{R} disposed near a rear wheel Wr is provided with three pots, i.e., a front pot P₁, a middle pot P₂ and a rear pot₃.

A first master cylinder Mc₁, which is operated by the brake lever L, is connected directly to the front pots P₁ and the rear pots P₃ of the brake cylinders Bc_{FR} and Bc_{FL} for the front wheel Wf. A mechanical servomechanism Ms as a second master cylinder which generates a secondary braking pressure by using a braking force acting on the front wheel Wf is combined with the left brake cylinder Bc_{FL}. The secondary braking pressure generated by the mechanical servomechanism Ms is transmitted through a pressure control valve Cv to the front pot P₁ and the rear pot P₃ of the brake cylinder Bc_{R} for the rear wheel Wr.

A second master cylinder Mc₂, which is operated by the brake pedal P, is connected to the middle pots P₂ of the brake cylinders Bc_{FR} and Bc_{FL} for the front wheel Wf and to the middle pot P₂ of the brake cylinder Bc_{R} for the rear wheel Wr.

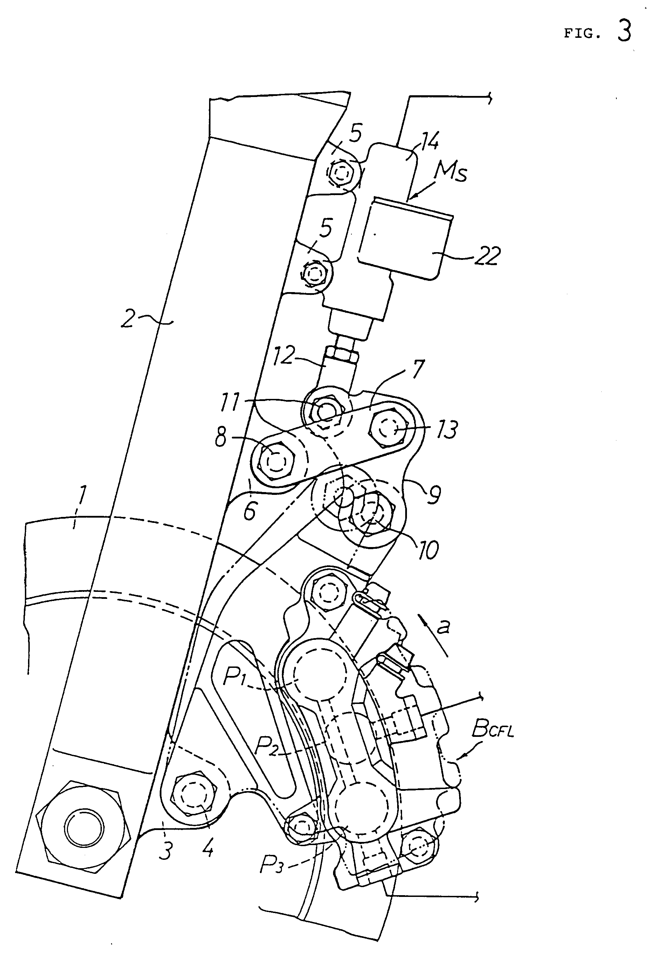

As shown in Fig. 3, the left brake cylinder Bc_{FL} having a pair of brake pads disposed on the opposite sides of a brake disk 1 combined with the front wheel Wf is pivotally joined with a pin 4 to a bracket 3 fixed to a lower part of a front fork 2. The mechanical servomechanism Ms having a substantially cylindrical shape is held on a pair of brackets 5 at an upper part of the front fork 2 so as to extend longitudinally along the rear surface of the front fork 2.

A substantially bar-shaped first link 7 has one end pivotally joined with a pin 8 to a bracket 6 fixed to the front fork 2. A substantially L-shaped second link 9 has one end pivotally joined with a pin 10 to the upper end of the brake cylinder Bc_{FL} and the other end pivotally joined with a pin 11 to an input member 12 of the mechanical servomechanism Ms. The other end of the first link 7 is joined pivotally with a pin 13 to the middle of the second link 9.

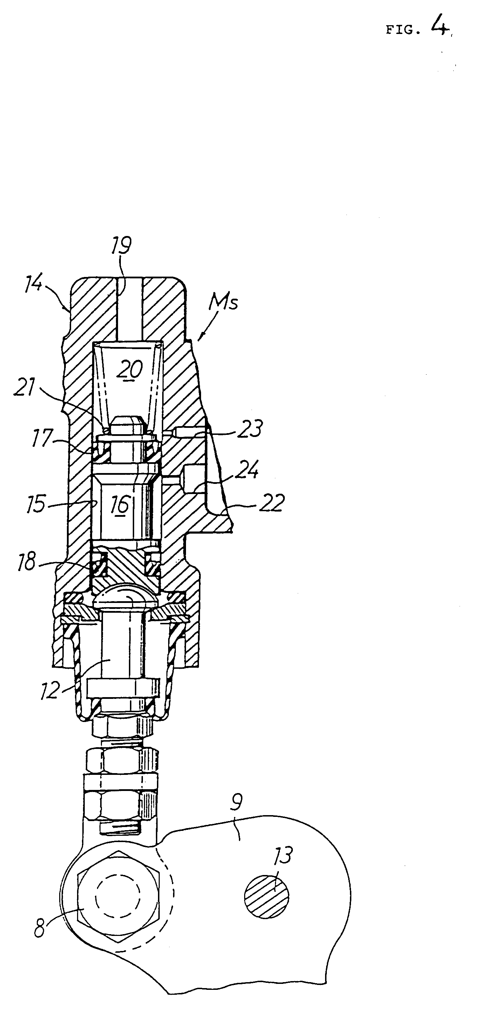

As best shown in Fig. 4, the mechanism servomechanism Ms has a casing 14 provided with a cylinder 15, and a piston 16 is fitted for axial sliding movement in the cylinder 15. The front end of the input member 12 is in contact with the rear end of the piston 16. A primary cup 17 and a secondary cup 18 are attached respectively to the front end and the rear end of the piston 16. A pressure chamber 20 having an outlet port 19 connected to the pressure control valve Cv is defined by the inner surface of the cylinder 15 and the primary cup 17. A return spring 21 for biasing the piston 16 backward is compressed in the pressure chamber 20. When the piston 16 is at the rearmost position as shown in Fig. 4, a space on the front side of the primary cup 17 and a space on the rear side of the primary cup 17 communicates with a reservoir 22 (Fig. 3) formed integrally with the casing 14 by means of relief ports 23 and a supply port 24, respectively.

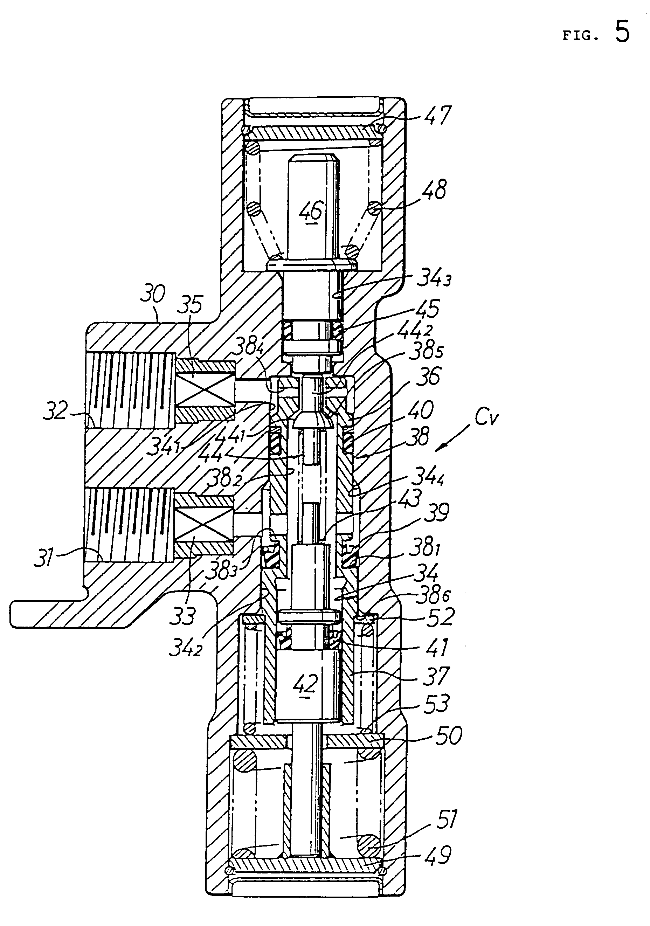

The construction of the pressure control valve Cv will be described hereinafter with reference to Fig. 5.

The pressure control valve Cv has a casing 30 provided with an inlet port 31 connected to the outlet port 19 of the mechanical servomechanism Ms, and an outlet port 32 connected to the front pot P₁ and the rear pot P₃ of the brake cylinder Bc_{R} for the rear wheel Wr.

A cylinder 34 formed in the casing 30 consists of a first cylinder 34₁ having a relatively small diameter and communicating with the outlet port 32 through a filter 35, and a second cylinder 34₂ having a relatively large diameter, communicating with the inlet port 31 through a filter 33 and coaxially joined at a shoulder 34₄ with the first cylinder 34₁. A hollow outer piston 38 comprises, in an integral unit, a proportional pressure reducing piston 36 slidably fitted in the first cylinder 34₁, and a pressure reducing piston 37 slidably fitted in the second cylinder 34₂ and coaxially joined to the proportional pressure reducing piston 36 at a shoulder 38₁. The proportional pressure reducing piston 36 is provided with a sealing member 40 fitted around the proportional pressure reducing piston 36 and extending to the surface of the first cylinder 34₁ to prevent leakage. The pressure reducing piston 37 is provided with a sealing member 39 fitted around the pressure reducing piston 37 and extending to the surface of the second cylinder 34₂ to prevent leakage.

The bore 38₂ of the outer piston 38 communicates with the inlet port 31 by means of a passage 38₃, and with the outlet port 32 by means of a passage 38₄. An inner piston 42 is fitted in the bore 38₂ of the outer piston 38 for sliding movement relative to the outer piston 38, and a sealing member 41 is fitted around the inner piston 42.

A cut valve 44 is placed in the upper portion of the bore of the outer piston 38, and is biased upward by a valve spring 43 compressed between the upper end of the inner piston 42 and the cut valve 44. The cut valve 44 has a valve element 44₁ capable of being seated on a valve seal 38₅ formed in the inner surface of the upper wall of the outer piston 38, and a stem 44₂ extending upward from the bore 38₂ of the outer piston 38.

A third cylinder 34₃ is formed in the upper part of the casing 30, and a cut piston 46 provided with a sealing member 45 is slidably fitted in the third cylinder 34₃. The cut piston 46 is biased downward by a cut spring 48 compressed between a spring seat 47 fixed to the upper end of the casing 30 and the cut piston 46 so that the lower end thereof is in contact with the upper end of the stem 44₂ of the cut valve 44. When the cut valve 44 and the cut piston 46 are at positions shown in Fig. 5, the valve element 44₁ of the cut valve 44 is separated from the valve seat 38₅ of the outer piston 38 to enable the inlet port 31 to communicate with the outlet port 32 by means of the passage 38₃, the bore 38₂, the space around the cut valve 44 and the passage 38₄.

A pressure reducing spring 51 is compressed between a spring seat 49 fixed to the lower end of casing 30 supporting the inner piston 42 at its lower end, and a spring seat 50 seated on a shoulder so as to be able to move only downward. A predetermined space is formed between the upper surface of the spring seat 50 and the lower end of the outer piston 38. A proportional pressure reducing spring 53 is compressed between a spring seat 52 fitted in the casing 30 so as to be movable only downward and the upper surface of the spring seat 50. The spring seat 52 is pressed against a shoulder 38₆ formed in the outer piston 38.

The preset load of the the pressure reducing spring 51 is the largest, that of the cut spring 48 is the second largest and the that of the reducing spring 53 is the smallest. Therefore, first the outer piston 38 moves down compressing the proportional pressure reducing spring 53, the cut piston 46 moves up compressing the cut spring 48, and then the outer piston 38 moves further down compressing the pressure reducing spring 51 through the spring seat 50 in contact with the lower end of the outer piston 38 as the pressure applied to the inlet port 31 increases.

The operation of the braking force controller thus constructed will be described hereinafter.

A braking pressure generated by the first master cylinder Mc₁ is transmitted to the front pots P₁ and the rear pots P₃ of the brake cylinders Bc_{FR} and Bc_{FL} for the front wheel Wf when the brake lever L is operated to brake the front wheel Wf. A braking pressure generated by the second master cylinder Mc₂ is transmitted to the middle pots P₂ of the brake cylinders Bc_{FR} and Bc_{FL} for the front wheel Wf and the middle pot P₂ of the brake cylinder Bc_{R} for the rear wheel Wr to brake both the front wheel Wf and the rear wheel Wr.

As best shown in Fig. 3, when the left brake cylinder Bc_{FL} is actuated, the reaction force of the brake disk 1 turns the left brake cylinder Bc_{FL} in the direction of the arrow a on the pin 4 to push up the input member 12 through the linkage including the first link 7 and the second link 9 and, consequently, the mechanical servomechanism generates a secondary braking pressure.

Referring to Fig. 4, when the input member 12 driven upward by the reaction force of the braked front wheel Wf pushes the piston 16 upward, a braking pressure is generated within the pressure chamber 20 upon the movement of the primary cup 17 past the relief port 23 and the braking pressure is transmitted through the outlet port 19 to the pressure control valve Cv. When the braking force is removed from the front wheel Wf, the piston 16 is moved downward by the resilience of the return spring 21, and the brake fluid flows from the reservoir 22 through the supply port 24 and the primary cup 17 into the pressure chamber 20 to replenish the pressure chamber with the brake fluid.

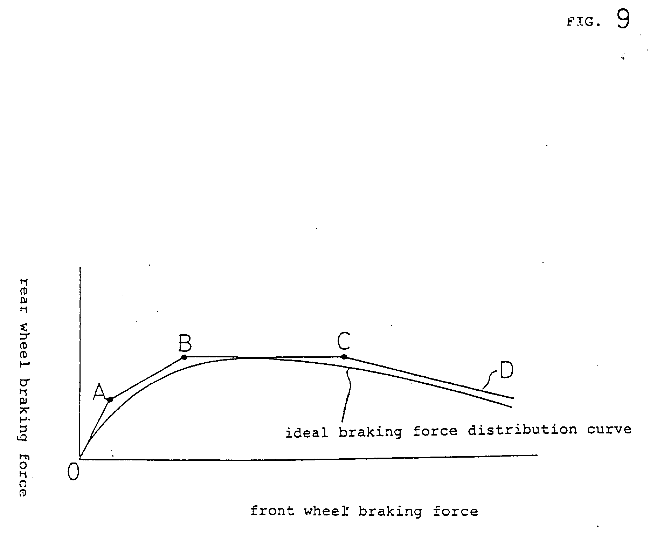

Referring to Fig. 5, when the brake lever L is operated to make the mechanical servomechanism Ms apply the braking pressure to the input port 31 of the pressure control valve Cv, the braking pressure is transmitted through the port 38₃ and the bore 38₂ of the outer piston 38, the space surrounding the cut valve 44, the port 38₄ and the outlet port 32 to the front pot P₁ and the rear pot P₃ of the brake cylinder Bc_{R} for the rear wheel Wr. In this state, both the braking force acting on the front wheel Wf and the braking force acting on the rear wheel Wr increase as the angle of turning of the brake lever L increases. In this mode of operation, the braking force distribution characteristic of the braking force controller is represented by a straight line interconnecting points O and A in Fig. 9.

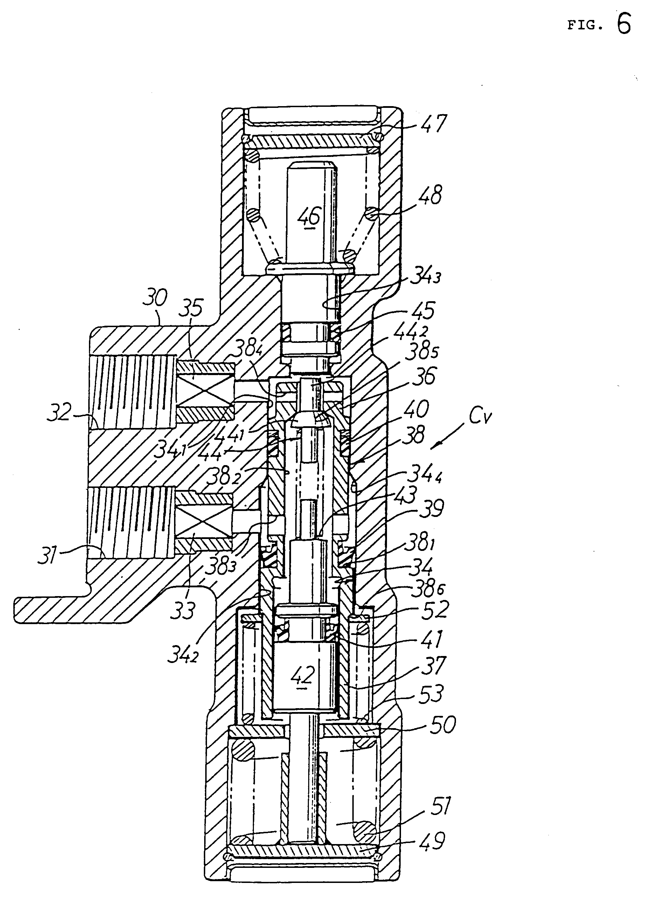

The braking force acting on the rear wheel Wr increases gradually as the breaking pressure applied to the inlet port 31 of the pressure control valve Cv increases. Upon the increase of the braking force acting on the rear wheel Wr to a value represented by the point A in Fig. 9, the outer piston 38 is moved downward against the preset load of the proportional pressure reducing spring 53 by the braking pressure acting on the upper surface of the outer piston 38 as shown in Fig. 6. Consequently, the valve seat 38₅ of the outer piston 38 comes into contact with the valve element 44₁ of the cut valve 44 to disconnect the inlet port 31 from the outlet port 32 temporarily. When the braking pressure applied to the inlet port 31 increases further, the pressure prevailing in the bore 38₂ of the outer piston 38 increases to push up the outer piston 38 and, finally, the inlet port 31 communicates again with the outlet port 32. Thus, the outer piston 38 moves up and down at a short period as the braking pressure increases to bring the valve seat 38₅ of the outer piston 38 intermittently into contact with the valve element 44₁ of the cut valve 44 and, consequently, the rate of increase of the braking pressure acting on the brake cylinder Bc_{R} is decreased. Consequently, the rate of increase of the braking force acting on the rear wheel Wr decreases as the braking force acting on the front wheel Wf increases beyond the point A in Fig. 9.

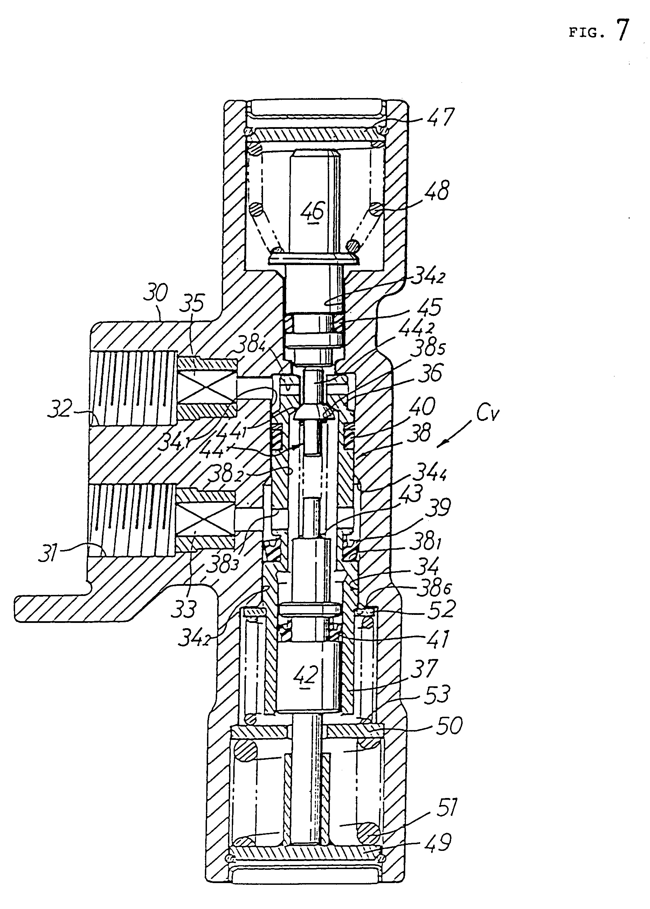

When the braking pressure applied to the inlet port 31 of the pressure control valve Cv increases further and the braking force acting on the rear wheel Wr reaches a value corresponding to a point B in Fig. 9, the cut piston 46 is moved up against the preset load of the cut spring 48 as shown in Fig. 7, so that the cut valve 44 is raised by the valve spring 43 and the valve element 44₁ of the cut valve 44 is seated on the valve seat 38₅ of the outer piston 38. Consequently, the inlet port 31 is disconnected completely from the outlet port 32 and the braking pressure applied through the outlet port 32 to the brake cylinder Bc_{R} is held constant even if the braking pressure applied to the inlet port increases further after the valve element 44₁ has been seated on the valve seal 38₅.

Upon the increase of the braking force acting on the rear wheel Wr to a value corresponding to a point C in Fig. 9 due to the further increase of the braking pressure applied to the inlet port 31 of the pressure control valve Cv, the outer piston 38 is moved downward compressing the proportional pressure reducing spring 53 by a downward pressure acting on the shoulder 38₁ of the outer piston 38, the lower end of the outer piston 38 comes into contact with the spring seat 50, and the outer piston 38 is moved further downward compressing the pressure reducing spring 51 as shown in Fig. 7. Consequently, a chamber formed over the upper end of the outer piston 38 and communicating with the outlet port 32 expands to reduce the braking pressure applied to the brake cylinder Bc_{R}.

Thus, the braking pressure applied to the brake cylinder Bc_{R} for the rear wheel Wr, hence the braking force acting on the rear wheel Wr is varied in four steps by the agency of the pressure control valve Cv to vary the braking force distribution ratio, i.e., the ratio between the braking force acting on the front wheel Wf and the braking force acting on the rear wheel Wr, along a polygonal line O, A, B, C and D shown in Fig. 9. The polygonal line representing the variation of the braking force distribution ratio is in close agreement with an ideal braking force distribution curve as shown in Fig. 9.

The braking force applied to the rear wheel Wr by the brake cylinder Bc_{R} when the brake pedal P is operated is the sum of the braking force corresponding to the pressure applied through the pressure control valve Cv to the front pot P₁ and the rear pot P₃ of the brake cylinder Bc_{R} by the mechanical servomechanism Ms and the braking force corresponding to the middle pot P₂ of the brake cylinder Bc_{R} by the second master cylinder Mc₂, which is greater than the braking force acting on the rear wheel Wr represented by the braking force distribution curve shown in Fig. 9.

As mentioned above, the outer piston 38 received in the cylinder formed in the casing 30 of the pressure control valve Cv and provided, in an integral unit, with the proportional pressure reducing piston 36 and the pressure reducing piston 37 is capable of both the proportional pressure reducing action and the pressure reducing action. Therefore, the pressure control valve Cv in this embodiment needs less component parts and a smaller construction than the conventional pressure control valve Cv. The coaxial arrangement of the outer piston 38, i.e., the proportional pressure reducing piston 36 and the pressure reducing piston 37, and the cut piston 46 in the cylinder 34, reduces the number of machining steps for forming the cylinder 34 and further enables the pressure control valve Cv to be formed in a compact construction.

As is apparent from the foregoing description, in one aspect of the present invention, the proportional pressure reducing means, i.e., the proportional pressure reducing piston, and the pressure reducing means, i.e., the pressure reducing piston, are formed in an integral unit and are fitted in the single cylinder, which reduces the number of component parts and requires a relatively small casing.

In another aspect of the present invention, the proportional pressure reducing means, the pressure holding means and the pressure reducing means are arranged coaxially in the cylinder, which further enables the use of a relatively small casing which can be easily machined.

### DESCRIPTION OF REFERENCE CHARACTERISTICS

- Bc_{R}: Brake cylinder
- Ms: Mechanical servomechanism
- 30: Casing
- 31: Inlet port
- 32: Outlet port
- 34: Cylinder
- 36: Proportional pressure reducing piston
- 37: Pressure reducing piston
- 44: Cut valve
- 51: Pressure reducing spring
- 53: Proportional pressure reducing spring

## Claims

1. A braking force controller for regulating an input hydraulic pressure produced by a master cylinder (Ms) and applied to an input port (31) and transmitting a regulated hydraulic pressure through an output port (32) to a brake cylinder (Bc_{R}), said braking force controller comprising: a casing (30) provided with a cylinder (34) communicating with the input port (31) and the output port (32), a proportional pressure reducing means for reducing the rate of increase of the output hydraulic pressure according to the increase of the input hydraulic pressure, comprising a proportional pressure reducing piston (36) slidably fitted in the cylinder (30) so as to slide against the force of a proportional pressure reducing spring (53) when an input hydraulic pressure acts thereon, and a cut valve (44) held within the proportional pressure reducing piston (36) for movement relative to the proportional pressure reducing piston (36) to control the connection of the input port (31) and the output port (32); a pressure holding means for holding the output hydraulic pressure on a fixed level regardless of increase in the input hydraulic pressure; and a pressure reducing means for reducing the output hydraulic pressure when the input hydraulic pressure increases;
characterized in that the pressure reducing means comprises a pressure reducing piston (37) formed integrally with the proportional pressure reducing piston (36), slidably fitted in the cylinder (34) and capable of sliding against the preset load of a pressure reducing spring (51) greater than that of the proportional pressure reducing spring (53) when the input hydraulic pressure increases beyond a predetermined value.

2. A braking pressure controller according to claim 1, wherein the proportional pressure reducing means, the pressure holding means and the pressure reducing means are arranged coaxially within the cylinder (34).

## Patentansprüche

1. Bremskraftregler zum Regulieren eines durch einen Geberzylinder (Ms) erzeugten und an eine Einlaßöffnung (31) angelegten Eingangshydraulikdrucks und zum Übertragen eines regulierten Hydraulikdrucks durch eine Auslaßöffnung (32) zu einem Bremszylinder (Bc_{R}), wobei der Bremskraftregler umfaßt: ein Gehäuse (30), das mit einem Zylinder (34) versehen ist, welcher mit der Einlaßöffnung (31) und der Auslaßöffnung (32) in Verbindung steht, ein Proportionaldruckverringerungsmittel zum Verringern der Zunahmerate des Ausgangshydraulikdrucks gemäß einer Zunahme des Eingangshydraulikdrucks, umfassend einen Proportionaldruckverringerungskolben (36), welcher verschiebbar in den Zylinder (30) eingepaßt ist, um sich gegen die Kraft einer Proportionaldruckverringerungsfeder (53) zu verschieben, wenn ein Eingangshydraulikdruck auf diesen einwirkt, und ein Unterbrechungsventil (44), welches innerhalb des Proportionaldruckverringerungskolbens (36) zur Bewegung bezüglich des Proportionaldruckverringerungskolben (36) gehalten ist, um die Verbindung der Einlaßöffnung (31) mit der Auslaßöffnung (32) zu steuern/regeln, ein Druckhaltemittel zum Halten des Ausgangshydraulikdrucks auf einem festen Wert unbeachtet einer Zunahme des Eingangshydraulikdrucks, und ein Druckverringerungsmittel zum Verringern des Ausgangshydraulikdrucks, wenn der Eingangshydraulikdruck zunimmt,
dadurch gekennzeichnet, daß das Druckverringerungsmittel einen Druckverringerungskolben (37) umfaßt, welcher integral mit dem Proportionaldruckverringerungskolben (36) ausgebildet ist, verschiebbar in den Zylinder (34) eingepaßt ist und sich dann, wenn der Eingangshydraulikdruck über einen vorbestimmten Wert zunimmt, gegen die vorbestimmte Last einer Druckverringerungsfeder (51) verschieben kann, welche Last größer ist als diejenige der Proportionaldruckverringerungsfeder (53).

2. Bremskraftregler nach Anspruch 1, worin das Proportionaldruckverringerungsmittel, das Druckhaltemittel und das Druckverringerungsmittel koaxial innerhalb des Zylinders (34) angeordnet sind.

## Revendications

1. Un régulateur de force de freinage destiné à commander la pression hydraulique d'entrée, produite par un maître-cylindre (Ms) et appliqué à un orifice d'entrée (31), et à transmettre une pression hydraulique régulée par un orifice de sortie (32) à un cylindre de frein (Bc_{R}), ledit régulateur de force de freinage comprenant : un carter (30) doté d'un cylindre (34) communiquant avec l'orifice d'entrée (31) et l'orifice de sortie (32), un moyen de réduction de pression à fonctionnement proportionnel destiné à réduire la vitesse d'augmentation de la pression hydraulique de sortie en fonction de l'augmentation de la pression hydraulique d'entrée, comprenant un piston de réduction de pression à action proportionnelle (36), monté coulissant dans le cylindre (30) de manière à coulisser à l'encontre de la force d'un ressort de réduction de pression proportionnelle (53) lorsqu'une pression hydraulique d'entrée agit sur lui, et une soupape d'isolement (44) maintenue à l'intérieur du piston de réduction de pression proportionnelle (36) afin de permettre un déplacement par rapport au piston de réduction de pression proportionnelle (36), afin de commander la liaison à l'orifice d'entrée (31) et à l'orifice de sortie (32); un moyen de maintien de pression destiné à maintenir la pression hydraulique de sortie à un niveau fixe indépendamment de l'augmentation de la pression hydraulique d'entrée; et un moyen de réduction de pression conçu pour réduire la pression hydraulique de sortie lorsque la pression hydraulique d'entrée augmente;
caractérisé en ce que le moyen de réduction de pression comprend un piston de réduction de pression (37) formé d'une seule pièce avec le piston de réduction de pression proportionnelle (36), monté coulissant dans le cylindre (34) et susceptible de coulisser à l'encontre de la charge préréglée d'un ressort de réduction de pression (51), charge supérieure à celle du ressort de réduction de pression proportionnelle (53), lorsqu'il y a augmentation de pression hydraulique, dépassant une valeur prédéterminée.

2. Un régulateur de pression de freinage selon la revendication 1, dans lequel le moyen de réduction de pression proportionnelle, le moyen de maintien de pression et le moyen de réduction de pression sont agencés coaxialement à l'intérieur du cylindre (34).
